# EUROPÄISCHE PATENTSCHRIFT

(11) **EP 1 277 933 B1**
(45) Veröffentlichungstag und Bekanntmachung des Hinweises auf die Patenterteilung: **07.02.2007**
(21) Anmeldenummer: 02013774.1
(22) Anmeldetag: 21.06.2002
(51) Int. Cl.: F02B 27/02, F01M 13/02

(54) **Ansaugvorrichtung für eine Brennkraftmaschine mit Kurbelgehäuseentlüftung**
Intake system for combustion engine with crankcase ventilation
Système d'admission pour moteur à combustion interne avec ventilation du carter

(30) Priorität: 27.06.2001 DE 10131004
(43) Veröffentlichungstag der Anmeldung: 22.01.2003
(73) Patentinhaber: Mann + Hummel GmbH, 71638 Ludwigsburg (DE)
(72) Erfinder: Rentschler, Klaus, 71126 Gäufelden (DE); Wagner, Werner, 71640 Ludwigsburg (DE)
(74) Vertreter: Voth, Gerhard

(56) Entgegenhaltungen:
- EP-A- 1 152 131
- DE-A- 10 045 636
- DE-A- 19 546 545

## Beschreibung

### Stand der Technik

Die Erfindung betrifft eine Ansaugvorrichtung für eine Brennkraftmaschine mit Kurbelgehäuseentlüftung, wobei eine Kanalstruktur für die Einleitung der Kurbelgehäusegase in das Innere der Ansaugvorrichtung vorgesehen ist.

Ansaugvorrichtungen der eingangs beschriebenen Art sind z. B. aus der DE 42 29 408 C1 oder der DE-A-195 46 545 bekannt. Gemäß der einzigen Figur des ersteren Dokumentes ist zur Einleitung der Kurbelgehäusegase in das Innere des Saugrohres eine Zwischenplatte 17 vorgesehen, welche in eine Flanschverbindung der Ansaugvorrichtung eingebracht ist. Einer der Flansche weist eine Kanalstruktur A, B auf, welche im Zusammenwirken mit der Zwischenplatte die Kanalstrukturen zur Einleitung des Kurbelgehäusegases bilden, wobei die Zwischenplatte hierfür entsprechende Bohrungen 15 oder sonstige Öffnungen 16 aufweist.

Über die Bohrungen und Öffnungen kann das Kurbelgehäuse dem Ansaugstrom kurz hinter der Drosselklappe derart zugeführt werden, dass sich eine Durchmischung mit der Ansaugluft ergibt. Jedoch ist das hierbei erzielte Ergebnis nicht vollständig homogen, so dass eine Zuführung von Kurbelgehäusegasen in absolut gleichen Teilen zu den einzelnen Zylindern nicht möglich ist. Andererseits lässt sich mit Hilfe der Zwischenplatte die - Kanalstruktur zur Einleitung der Kurbelgehäusegase auf kostengünstige Weise bilden, wodurch eine hohe Wirtschaftlichkeit der vorgeschlagenen Lösung erreicht wird.

Aufgabe der Erfindung ist es daher, eine Ansaugvorrichtung für eine Brennkraftmaschine mit Kurbelgehäuseentlüftung zu schaffen, die eine wirtschaftlich herstellbare Kanalstruktur zur Einleitung der Kurbelgehäusegase in das Innere der Ansaugvorrichtung zur Verfügung stellt, welche eine homogene Verteilung der Kurbelgehäusegase auf die einzelnen Zylinder der Brennkraftmaschine gewährleistet. Diese Aufgabe wird durch die Merkmale des Patentanspruches 1 gelöst.

### Vorteile der Erfindung

Die erfindungsgemäße Ansaugvorrichtung weist in bekannter Weise einen Sammelraum auf, von dem die Saugkanäle abgehen. Die Saugkanäle münden dabei in Austritte, welche mit den Brennräumen der Zylinder verbunden werden können und im allgemeinen zu diesem Zweck mit einem Zylinderkopfflansch oder mit elastischen Entkoppelungelementen versehen sind. Weiterhin weist die Ansaugvorrichtung einen Einlass für die Ansaugluft auf, welcher normalerweise in den Sammelraum mündet. Die Ansaugvorrichtung kann weiterhin eine Drosselklappe vor dem Einlass aufweisen, die z. B. an selbigen angeflanscht ist.

In die Ansaugvorrichtung ist weiterhin eine Kanalstruktur integriert, welche zur Einleitung des rückgeführten Kurbelgehäusegases in die Ansaugluft geeignet ist. Zu diesem Zweck sind Zuführungen vorgesehen, die die Kanalstruktur mit dem Innenraum der Ansaugvorrichtung verbinden. Weiterhin ist ein Gasanschluss vorgesehen, der mit dem Kurbelgehäuse verbunden werden kann. Diese Verbindung muss nicht direkt erfolgen, sondern kann auch über eine Leitung erreicht werden.

Die Ansaugvorrichtung kann pro Zylinder mehrere Saugkanäle aufweisen, wobei einer von ihnen länger und der andere kürzer ausgebildet ist. Im kurzen Saugkanal ist ein Verschlussorgan angebracht, so dass dieser nur bei erhöhten Drehzahlen der Brennkraftmaschinen geschaltet werden kann. Bei geringen Drehzahlen der Brennkraftmaschine wird die Ansaugluft über den längeren Weg des anderen Saugkanals angesogen.

Gekennzeichnet ist die Erfindung dadurch, dass die Trennwand, welche die Kanalstruktur zur Kurbelgehäusegaseinleitung bildet, für jeden Saugkanal eine gesonderte Zuführung ausbildet. Hierdurch wird eine zylinderselektive bzw. quasi zylinderselektive Einleitung der Kurbelgehäusegase erreicht. Dies bedeutet, dass in jeden Saugkanal die gleiche Menge an Kurbelgehäusegas zugeführt wird, wodurch eine gleichmäßige Verbrennung in der Brennkraftmaschine möglich ist. Dies beeinflusst die Qualität des Abgases positiv, so dass die Umweltbelastung der Brennkraftmaschine auf ein Minimum reduziert werden kann.

Die zylinderselektiven Zuführungen können auch derart angeordnet werden, dass sie sowohl die bereits erwähnten langen wie auch kurzen Saugkanäle der jeweiligen Zylinder bedienen können. In beiden Schaltzuständen wird das eingeleitete Kurbelgehäusegas von dem Ansaugluftstrom mitgerissen. Wichtig ist dabei lediglich, dass jede Zuführung im wesentlichen einen der Zylinder mit Kurbelgehäusegasen versorgt, so dass weiterhin die quasi selektive Einleitung gewährleistet ist.

Einer besonderen Ausgestaltung der Erfindung zufolge ist die Trennwand in das durch die Ansaugvorrichtung gebildete Volumen eingeschweißt. Dies bedeutet, dass die Einschweißung auf der Innenseite des Gehäuses der Ansaugvorrichtung vorgenommen wird. Zusammen mit der Wandung des Gehäuses bildet somit die Trennwand die Kanalstrukturen für die Kurbelgehäusegase. Da die Kanalstrukturen somit innen verlaufen, ist die Anbringung der Zuführungen ohne weiteres möglich. Das Verfahren des Einschweißens ist insbesondere für Kunststoffsaugrohre geeignet.

Die Einbringung der Trennwand in das Innere des Saugrohres ermöglicht mit einem einfachen Bauteil, dass komplexe Kanalstrukturen mit Zuführungen für jeden einzelnen Saugkanal geschaffen werden können. Daher ist eine wirtschaftliche Lösung gewährleistet, wobei gleichzeitig das Ergebnis hinsichtlich der Verteilung der Kurbelgehäusegase auf die einzelnen Zylinder optimiert wird.

Eine weitere Ausgestaltung der Erfindung sieht vor, dass die Ansaugvorrichtung aus einzelnen Schalen besteht, welche miteinander verschweißt werden. Hierbei bietet sich beispielsweise das Vibrationsschweißverfahren an. Die Trennwand ist dabei als eine dieser Schalen ausgeführt und kann in einem für die Fertigung günstigen Zeitpunkt mit der Saugrohrschale verschweißt werden, mit der sie zur Bildung der Kanalstrukturen kommuniziert. Der große Vorteil der Einbringung der besagten Trennwand in eine Ansaugvorrichtung aus mehreren Schalen ist die Zugänglichkeit. Die Trennwand kann in den Innenraum des Saugrohrs eingebracht werden, bevor dieser durch Verschweißung der Saugrohrschalen verschlossen wird. Grundsätzlich ist die Einschweißung jedoch auch in eine vorgefertigte Ansaugvorrichtung möglich, wenn diese z. B. über den Einlass in den Sammelraum eingebracht wird. In diesem Fall bietet sich jedoch ein anderes Verbindungsverfahren, beispielsweise das Einclipsen, an. Hierzu ist zu bemerken, dass eine vollständige Abdichtung der Kanalstrukturen gegenüber dem Innenraum der Ansaugvorrichtung nicht notwendig ist. Aufgrund eventueller Undichtheiten wird das Kurbelgehäusegas dennoch dem Innenraum der Ansaugvorrichtung zugeführt, da diese ja vollständig im Innenraum angeordnet ist. Hier ergibt sich ein weiterer wesentlicher Vorteil im Vergleich zur Ausführung der Trennwand als Zwischenflansch gemäß dem Stand der Technik.

Eine weitere Ausführung der Erfindung sieht vor, dass die Trennwand einteilig mit einem Verband von Ansaugstutzen hergestellt ist. Diese Ansaugstutzen bilden die Öffnungen der Saugkanäle hin zum Sammelraum. Damit ist gemeint, dass diese Öffnungen häufig durch eine trompetenartige Erweiterung gebildet werden, um das Ansaugverhalten der Ansaugvorrichtung zu verbessern. Diese zusätzlichen Bauteile müssen ohnehin auf Grund der Vermeidung von Hinterschneidungen als gesondertes Bauteil in die Ansaugvorrichtung eingefügt werden. Eine Integration der Trennwand in ein solches Bauteil vermindert somit zusätzlichen Fertigungsaufwand, wodurch die Wirtschaftlichkeit der Lösung gewährleistet werden kann. Mit der einteiligen Herstellung von Trennwand und dem Verband der Ansaugstutzen ist also gemeint, dass dieses Teil ein einziges Bauteil vor der Montage mit der Ansaugvorrichtung ist. Dieses kann z. B. urformtechnisch, im Falle eines Kunststoffbauteils also durch Spritzgießen hergestellt werden. Nach der Montage kann dieses gesonderte Bauteil jedoch mit der restlichen Ansaugvorrichtung ebenfalls ein Bauteil bilden, wenn es z. B. eingeschweißt ist. Es kann aber auch mehrteilig ausgeführt sein, indem eine lösbare Verbindung wie die bereits beschriebene Clipsverbindung bevorzugt wird.

Eine vorteilhafte Ausgestaltung der Erfindung sieht vor, dass die Kanalstruktur derart ausgebildet ist, dass vom Gasanschluss zu den einzelnen Zuführungen jeweils ein im wesentlichen gleich langer Weg zurück gelegt wird. Dadurch kann die Verteilung der Kurbelgehäusegase auf die einzelnen Zuführungen weiter vergleichmäßigt werden, was der zylinderselektiven Einleitung in das Saugrohr zuträglich ist. Besonders vorteilhaft ist die symmetrische Anordnung der Einzelkanäle in der Kanalstruktur. Durch einen symmetrischen Verlauf lassen sich zusätzlich ähnliche, z. B. spiegelbildliche Verläufe des Stroms an Kurbelgehäusegas erzielen. Dieser zusätzliche Vergleichmäßigungseffekt führt zu einer homogenen Einspeisung der Kurbelgehäusegase durch die einzelnen Zuführungen.

### Zeichnung

Weitere Einzelheiten der Erfindung werden in der Zeichnung anhand von schematischen Ausführungsbeispielen beschrieben. Hierbei zeigen
- Figur 1: einen Schnitt durch das erfindungsgemäße Saugrohr in der Ebene der Saugkanäle und
- Figur 2: den Schnitt A - A gemäß Figur 1.

### Beschreibung der Ausführungsbeispiele

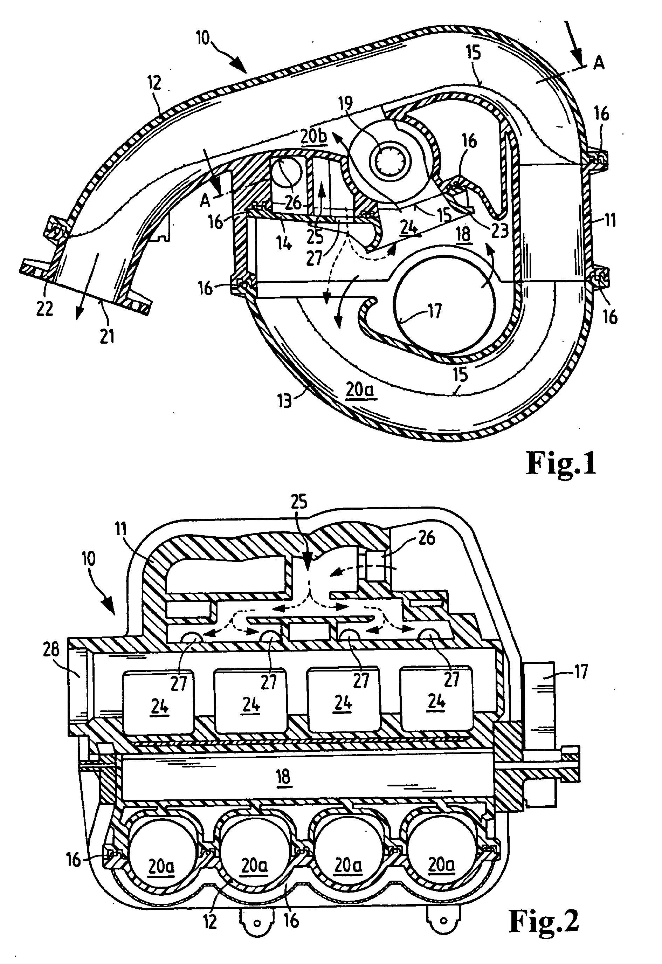

In Figur 1 ist eine Ansaugvorrichtung dargestellt. Diese weist ein Gehäuse 10 auf, welches in Mehrschalentechnik hergestellt ist. Dem gemäß weist es einen Grundkörper 11, eine Oberschale 12, eine Unterschale 13 und eine Trennwand 14 auf. Diese Schalen sind in einer für die Zugänglichkeit geeigneten Reihenfolge miteinander vibrationsgeschweißt, wofür entlang von Trennfugen 15 zwischen den Schalen Schweißränder 16 vorgesehen sind.

Die Funktion der Ansaugvorrichtung lässt sich am besten an Hand des Weges der Ansaugluft durch den Innenraum derselben erklären. Der Weg der Ansaugluft ist durch durchgezogene Pfeile angedeutet. Diese wird durch einen Einlass 17 in einen Sammelraum 18 geführt, von dem aus sie in Abhängigkeit der Stellung einer Schaltwalze 19 (in Figur 1 geöffnet dargestellt) entweder in einen Saugkanal 20a oder hauptsächlich in einen Saugkanal 20b geleitet wird. Durch die Saugkanäle 20a, b gelangt die Ansaugluft zu einem Austritt 21, der bei dem Saugrohr entsprechend Figur 1 einen Zylinderkopfflansch 22 zur Anbringung am Zylinderkopf einer nicht dargestellten Brennkraftmaschine bildet.

Eine der Schalen ist als Trennwand 14 ausgeführt. In diese Trennwand sind Ansaugstutzen 23 integriert, welche Öffnungen 24 der kurzen Saugkanäle 20b hin zum Sammelraum 18 bilden. Weiterhin ist die Trennwand als Abdeckung für eine Kanalstruktur 25 vorgesehen, welche durch Wandteile des Grundkörpers 11 gebildet ist. Diese Kanalstruktur dient der Einleitung von Kurbelgehäusegasen aus dem nicht dargestellten Kurbelgehäuse der Brennkraftmaschine in den Sammelraum 18 der Ansaugvorrichtung. Die Kanalstruktur weist einen Gasanschluss 26 auf, der mit dem Kurbelgehäuse verbindbar ist und am gegenüber liegenden Ende der Kanalstruktur mehrere Zuführungen 27 aufweist, von denen in Figur 1 nur eine zu sehen ist. Durch diese Zuführung kann das eingeleitete Kurbelgehäusegas, dargestellt durch einen gestrichelten Pfeil, entweder in die langen Saugkanäle 20a oder in die kurzen Saugkanäle 20b quasi zylinderselektiv eingeleitet werden. Eine echte Zylinderselektivität ist nicht gegeben, da das eingeleitete Kurbelgehäusegas durch den gemeinsamen Sammelraum geführt wird. Jedoch ist auf Grund der vorliegenden Strömungsverhältnisse eine direkte Zuordnung der jeweiligen Zuführungen 27 zu den entsprechenden Saugkanälen 20a, b möglich.

In Figur 2 ist der Verlauf der Kanalstruktur 25 besser zu erkennen. Es fällt der baumartige Aufbau mit dem Gasanschluss 26 als Stamm und den einzelnen Zweigen, die am Ende die Zuführungen 27 aufweisen, auf. Dabei ist durch die gestrichelten Pfeile angedeutet, wie sich der Strom des Kurbelgehäusegases jeweils symmetrisch verzweigt, wodurch eine sehr gleichmäßige Durchströmung der Zuführungen 27 erreicht wird. Unterhalb der Zuführung ist der Sammelraum 18 angeordnet.

Weiterhin ist eine Einbauöffnung 28 zu erkennen, welche zur Aufnahme der nur in Figur 1 dargestellten Schaltwalze 19 dient. Die Einbauöffnung wird nach Einbau der Schaltwalze mit einem nicht dargestellten Deckel verschlossen. Die weiteren Bauteile können der Beschreibung gemäß Figur 1 entnommen werden und sind mit entsprechenden Bezugszeichen versehen.

## Patentansprüche

1. Ansaugvorrichtung für eine Brennkraftmaschine mit Kurbelgehäusegasentlüftung, aufweisend
- ein Gehäuse (10) mit einem Einlass (17) und mehreren Austritten (21), die über einen Sammelraum (18) und mehrere Saugkanale (20a, b) miteinander verbunden sind,
- eine Kanalstruktur (25) für die Einleitung des rückgeführten Kurbelgehäusegases mit einem Gasanschluss (26) für die Verbindung mit dem Kurbelgehäuse und mehreren Zuführungen (27), die in das Innere der Ansaugvorrichtung münden, wobei zumindest Teile der Kanalstruktur durch eine als gesondertes Bauteil hergestellte Trennwand (14) gebildet sind, die zusammen mit Wandteilen des Gehäuses (10) das Volumen der Kanalstruktur bilden, wobei
die Trennwand (14) für jeden Saugkanal (20a, b) eine gesonderte Zuführung (27) ausbildet.

2. Ansaugvorrichtung nach Anspruch 1, **dadurch gekennzeichnet, dass** die Trennwand in das durch die Ansaugvorrichtung gebildete Volumen eingeschweißt wird.

3. Ansaugvorrichtung nach Anspruch 2, **dadurch gekennzeichnet, dass** diese aus einzelnen Schalen+19 besteht, welche miteinander verschweißt werden, wobei die Trennwand (14) als eine dieser Schalen ausgeführt ist.

4. Ansaugvorrichtung nach einem der vorherigen Ansprüche, **dadurch gekennzeichnet, dass** die Trennwand einteilig mit einem Verband von Ansaugstutzen (23), die Öffnungen (24) der Saugkanäle hin zum Sammelraum (18) bilden, hergestellt ist.

5. Ansaugvorrichtung nach Anspruch 4, wobei pro Zylinder ein längerer Saugkanal und ein im Vergleich dazu kürzerer, verschließbarer Saugkanal vorgesehen sind, **dadurch gekennzeichnet, dass** die Ansaugstutzen (23), die Teil der Trennwand sind, an den kürzeren Saugkanälen angebracht sind.

6. Ansaugvorrichtung nach einem der vorherigen Ansprüche, **dadurch gekennzeichnet, dass** der Weg, den das rückgeführte Abgas in der besagten Kanalstruktur (25) zurücklegt, von dem Gasanschluss (26) zu den einzelnen Zuführungen (27) im wesentlichen gleich lang ist.

7. Ansaugvorrichtung nach Anspruch 6, **dadurch gekennzeichnet, dass** der Verlauf der einzelnen Zweige der Kanalstruktur (25) im wesentlichen symmetrisch ausgeführt ist.

## Claims

1. Intake device for an internal combustion engine with crankcase gas ventilation, the said intake device including
- a housing (10) with an inlet (17) and a plurality of outlets (21), which are interconnected by means of a collecting chamber (18) and a plurality of intake ducts (20a, b),
- a duct structure (25) for the introduction of the recirculated crankcase gas with a gas connection (26) for the connection to the crankcase and a plurality of supply inlets (27), which open out into the interior of the intake device, wherein at least portions of the duct structure are formed by a partition wall (14) that is produced as a separate component, which together with the wall parts of the housing form the volume of the duct structure, wherein the partition wall (14) forms a separate supply inlet (27) for each intake duct (20a, b).

2. Intake device according no claim 1, **characterised in that** the partition wall is welded into the volume formed by the intake device.

3. Intake device according to claim 2, **characterised in that** the said intake device comprises individual shells (19), which are welded together, wherein the partition wall (14) is in the form of one of the said shells.

4. Intake device according to one of the preceding claims, **characterised in that** the partition wall is produced in one part with an assembly of air intakes (23), which form openings (24) between the intake ducts and the collecting chamber (19).

5. Intake device according to claim 4, wherein a longer intake duct and a closable intake duct that is shorter in comparison to the said longer intake duct are provided per cylinder, **characterised in that** the air intakes (23), which are part of the partition wall, are mounted on the shorter intake ducts.

6. Intake device according to one of the preceding claims, **characterised in that** the path, which the recirculated gas covers in the said duct structure (25), from the gas connection (26) to the individual supply inlets (27) is substantially the same length.

7. Intake device according to claim 6, **characterised in that** the course of the individual branches of the duct structure (25) is substantially symmetrical.

## Revendications

1. Dispositif d'admission pour un moteur à combustion interne avec dégazage du carter de vilebrequin, présentant :
- un carter (10) comportant une entrée (17) et plusieurs sorties (21) reliées entre elles par une chambre collectrice (18) et par plusieurs canaux d'admission (20a, 20b),
- une structure de canaux (25) pour l'introduction des gaz de carter de vilebrequin recyclés comportant un raccord de gaz (26) pour la liaison avec le carter de vilebrequin et plusieurs conduites d'amenée (27) qui débouchent à l'intérieur du dispositif d'admission, et dont au moins des parties de la structure de canaux sont formées par une paroi de séparation (14) fabriquée en composant séparé, et forment avec les parties de paroi du carter (10) le volume de la structure de canaux,
dans lequel la paroi de séparation (14) de chaque canal d'admission (20a, b) constitue une conduite d'amenée (27) séparée.

2. Dispositif d'admission selon la revendication 1,
**caractérisé en ce que**
la paroi de séparation est soudée dans le volume formé par le dispositif d'admission.

3. Dispositif d'admission selon la revendication 2,
**caractérisé en ce qu'**
il est constitué de différentes coquilles soudées entre elles, la paroi de séparation (14) étant réalisée sous la forme de l'une de ces coquilles.

4. Dispositif d'admission selon l'une quelconque des revendications précédentes,
**caractérisé en ce que**
la paroi de séparation est d'une seule pièce ayant un groupe de tubulures d'admission (23) qui forment les ouvertures (24) des canaux d'admission jusqu'à la chambre collectrice (18).

5. Dispositif d'admission selon la revendication 4, avec pour chaque cylindre, un canal d'admission plus long et un canal d'admission plus court pouvant être fermé,
**caractérisé en ce que**
les tubulures d'admission (23), qui font partie de la paroi de séparation, sont placées sur les canaux d'admission plus courts.

6. Dispositif d'admission selon l'une quelconque des revendications précédentes,
**caractérisé en ce que**
les gaz d'échappement recyclés parcourent dans la structure de canaux (25) en question, depuis le raccord de gaz (26) vers les différentes conduites d'amenée (27), un trajet pratiquement de même longueur.

7. Dispositif d'admission selon la revendication 6,
**caractérisé en ce que**
le tracé des différentes branches de la structure de canaux (25) est pratiquement symétrique.
